# EUROPEAN PATENT APPLICATION

(11) **EP 0 653 332 A1**
(43) Date of publication of application: **17.05.1995**
(21) Application number: 94115970.9
(22) Date of filing: 10.10.1994
(51) Int. Cl.: B60R 13/06, B60J 10/10, B60J 10/08

(54) **Weather strip for motor vehicle**

(30) Priority: 28.10.1993 JP 293885/93; 29.10.1993 JP 293987/93; 15.11.1993 JP 308680/93
(71) Applicant: TOYODA GOSEI CO., LTD., Nishikasugai-gun, Sichi-ken (JP)
(72) Inventor: Yasukawa, Takemasa, Toyoda Gosei Heiwacho Plant, Nakashima-gun, Aichi-ken, 490-13 (JP); Koide, Masahiro, c/o Toyoda Gosei Heiwacho Plant, Nakashima-gun, Aichi-ken, 490-13 (JP); Mizutani, Yasushi, c/o Toyoda Gosei Heiwacho Plant, Nakashima-gun, Aichi-ken, 490-13 (JP)
(74) Representative: Blumbach, Kramer & Partner

(57) **Abstract**

A weather strip (71A) for attachment to a flange (44) of a body panel of a motor vehicle includes a U-shaped trim portion (72) in which a metal core (75) is embedded and a sealing portion (74) formed on an outer surface of the trim portion (72). The trim portion (72) has flange gripping portions (73) which project inwardly from opposed side walls for gripping the flange (44) on both sides thereof. The weather strip (71A) is attached to the flange (44) by caulking the side walls of the trim portion (72) with the flange (44) inserted between the flange griping portions (73). One flange gripping portion to be located outside the flange (44) in the attached state thereto is composed of a sponge layer which covers the inner surface of the trim portion (72) and is to come into pressurized contact with an opposed flange surface of the body panel.

## Description

The priority applications, Japanese Patent Application Nos. Hei 5-308680, filed in Japan on November 15, 1993; Hei 5-293885 filed in Japan on October 28, 1993; and Hei 5-293987 filed in Japan on October 29, 1993 are hereby incorporated into the present specification by this reference.

### BACKGROUND OF THE INVENTION

### 1. Field of the Invention

The present invention relates to weather strips for motor vehicles, and, more particularly, to weather strips for attachment to flanges formed along edges of vehicle body panels.

### 2. Background Information

In motor vehicles including sun roofs, for example, in order to seal between an end edge of a roof panel defining a roof opening and a peripheral edge of a sun roof panel which opens and closes the roof opening, a weather strip is attached to the peripheral edge of the sun roof panel.

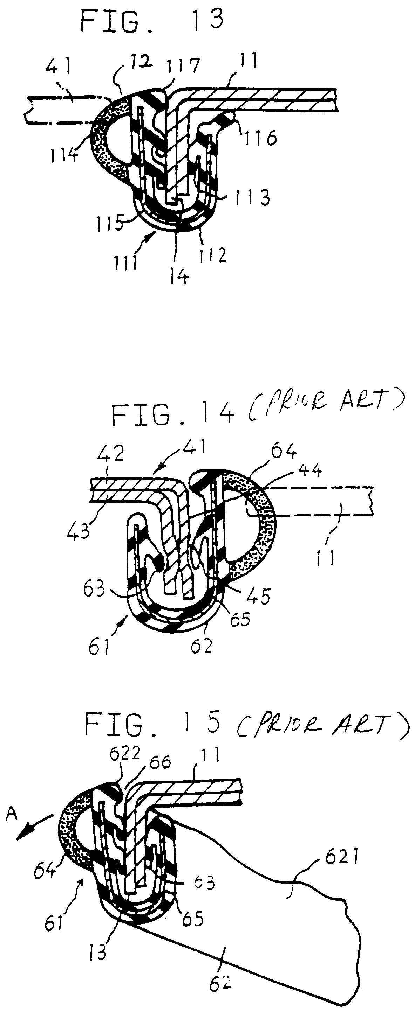

FIG. 14 illustrates one example of a conventional weather strip for use in a sun roof. Along a peripheral edge of a sun roof panel which opens and closes a roof opening of a roof panel 11, a flange 44 is formed. The flange 44 is composed of an outer panel 42 and an inner panel 43 which are bent downwardly and joined together by spot-welding at intervals.

A weather strip 61 has a trim portion 62 of a U-shaped cross-section, within which a metal core 65 is embedded, and a tubular sealing portion 64 arranged for abutment on an end edge of the roof panel 11. Flange gripping lips 63 project inwardly from opposed inner surfaces of the trim portion 62.

When the weather strip 61 is attached to the flange 44, the trim portion 62 is pushed onto the flange 44 in the state that the flange 44 is inserted between the opposed flange gripping lips 63. Or, the weather strip is formed by extrusion into the configuration that the side walls of the trim portion are spread apart and a mouth thereof is enlarged as compared with the final configuration in the attached state to the flange 44. Further, after the flange 44 is inserted into the trim portion 62, the trim portion 62 is caulked to narrow the mouth of the trim portion 62. Thus, the flange gripping lips 63 securely grip the flange 44 (USP 4,902,549).

In the spot-welded flange 44, depressions exist at the spot-welded places. Accordingly, the flange gripping lips 63 do not come into close contact with the flange 44 at these spot-welded places. Between ends of the gripping lips 63 and the depressions 45, gaps are generated so that rain water or car washing water is likely to pass through these gaps and enter the trim portion 62, and further intrude into a vehicle compartment.

A similar problem also arises in the case of the flange being formed by continuously joining a plurality of panels to each other with an end edge of one panel overlapped with that of its adjacent panel.

Weather strips for attachment to a flange around an opening of a trunk room or quarter window of a motor vehicle also have problems similar to the above-described problems.

Furthermore, when the weather strips are attached by caulking to a flange 13 of the body panel 11, as shown in FIG. 15, or to the flange of the sun roof panel, as described above, the following problems also arise. Namely, upon caulking of the trim portion 62 in FIG. 15, the end portion 621 of one side wall opposite to the sealing portion 64 becomes uneven, and the end edge line of the end portion 621 deforms into undulations. As a result, the appearance of the vehicle interior becomes deteriorated. In addition, there are cases where, upon caulking, the trim portion 62 tilts on the flange 13, and in this tilting state of the trim portion 62, the weather strip 61 is attached to the flange 13. If the trim portion 62 tilts in the direction A, a gap 66 is generated between the end portion 622 of the trim portion 62 and the opposed root portion of the flange 13 so that rain water or the like is likely to pass through this gap 66 and enter into the trim portion 62.

### SUMMARY OF THE INVENTION

It is an object of the present invention to provide a weather strip of which a trim portion is attached to a flange of a body panel by caulking and which enables flange gripping portions to come into close contact with the flange of the body panel.

It is another object of the present invention to provide a weather strip which ensures good sealing properties of the flange gripping portions against the flange, even if there exists unevenness or level difference in the flange.

It is still another object of the present invention to provide a weather strip which can be prevented from tilting on the flange, and from generating undulations in the trim portion upon attachment to the flange by caulking.

With one aspect of the present invention, in the weather strip of which a trim portion of a U-shaped cross-section is attached to a flange of a body panel by caulking, a sponge layer defining a flange gripping portion, is formed on an inner surface of at least one side wall of the trim portion which is located outside the flange, so as to cover the inner surface of the side wall and come into pressurized contact with a flange surface.

With another aspect of the present invention, a plurality of line-shaped projections are formed on an inner surface of at least one side wall of the trim portion, which is to be located outside the flange, to provide a flange gripping portion having a saw-toothed cross-section.

The above-described flange gripping portion of a sponge layer has flexibility so as to come into close contact with the entire flange surface while filling the depressions due to spot-welding or level difference, thereby providing good sealing properties between the trim portion and the flange.

Most parts of the saw-toothed flange gripping portion come into close contact with the flat surface of the flange, thereby providing good sealing properties between the trim portion and the flange.

With still another aspect of the present invention, a rib is further formed at an end edge of one side wall of the trim portion, which is to be located inside the flange, so as to project obliquely outwardly from the side wall of the trim portion and about the inner surface of the body panel.

When the trim portion is attached to the flange by caulking, the rib abuts the inner surface of the body panel to prevent the trim portion from tilting on the flange. Further, by virtue of the rib, the end edge of the side wall of the trim portion is prevented from generating undulations.

Other objects, features and characteristics of the present invention will become apparent upon consideration of the following description and the appended claims with reference to the accompanying drawings, all of which form a part of this specification.

### BRIEF DESCRIPTION OF THE DRAWINGS

FIG. 1 is a perspective view of a motor vehicle to which embodiments of a weather strip in accordance with the present invention are applied;
FIG. 2 is a cross-sectional view of a first embodiment of a weather strip in accordance with the present invention, shown prior to attachment to the motor vehicle;
FIG. 3 is a cross-sectional view of the weather strip of FIG. 2 which is attached to a flange of a body panel, taken along the line III-III of FIG. 1;
FIG. 4 is a cross-sectional view of a second embodiment of a weather strip in accordance with the present invention, shown attached to a flange of a vehicle body panel;
FIG. 5 is a perspective view of a single flange of a body panel, to which a third embodiment of a weather strip in accordance with the present invention is to be attached;
FIG. 6 is a cross-sectional view of the third embodiment of the weather strip which is attached to the flange shown in FIG. 5, taken along the line VI-VI of FIG. 5;
FIG. 7 is a cross-sectional view of a fourth embodiment of a weather strip in accordance with the present invention, shown prior to attachment of a flange of a body panel;
FIG. 8 is a cross-sectional view of the weather strip of FIG. 7, shown attached to a flange of a body panel;
FIG. 9 is a cross-sectional view of a fifth embodiment of a weather strip in accordance with the present invention, shown attached to a flange of a body panel;
FIG. 10 is a perspective view of another motor vehicle to which embodiments of the weather strip in accordance with the present invention are applied;
FIG. 11 is a cross-sectional view of a sixth embodiment of a weather strip in accordance with the present invention, which is attached to a flange of a body panel, taken along the line XI-XI of FIG. 10;
FIG. 12 is a cross-sectional view of a seventh embodiment of a weather strip in accordance with the present invention, shown prior to attachment to a flange of a body panel;
FIG. 13 is a cross-sectional view of the weather strip of FIG. 12, which is attached to a flange of a body panel, taken long the line XIII-XIII of FIG. 10;
FIG. 14 is a cross-sectional view of a conventional weather strip which is attached to a flange of a body panel; and
FIG. 15 is a partially cross-sectional perspective view of another conventional weather strip which is attached to a flange of a body panel.

### DETAILED DESCRIPTION OF THE INVENTION

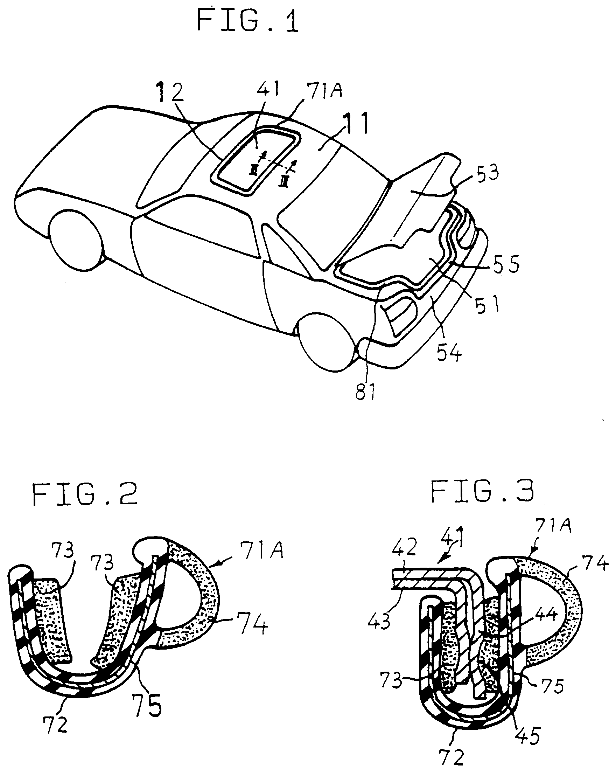

FIGS. 1 through 3 illustrate a first embodiment of the present invention. A sun roof panel 41 is detachably mounted on a roof panel 11 so as to close or open a roof opening 12. Along the outer periphery of the sun roof panel 41, a flange 44 extends downwardly. The flange 44 (FIG. 3) is composed of flanges of an outer panel 42 and an inner panel 43, and they are put together and joined by spot-welding at predetermined intervals. At the spot welded places of the flange 44, depressions 45 exist.

A weather strip 71A for attachment to the flange 44 has a trim portion 72 of a generally U-shaped cross-section and a tubular sealing portion 74 which is formed outwardly on one of the side walls of the trim portion 72. Wall-like flange gripping portions 73 are formed on opposed inner surfaces of the side walls of the trim portion 72 for gripping the flange 44 on both sides thereof. A metal core 75 is embedded within the trim portion 72. The trim portion 72 is made of solid rubber while the sealing portion 74 and the flange gripping portions 73 are made of sponge rubber. The weather strip 71A is formed integrally by extrusion into the configuration that, as shown in FIG. 2, the side walls of the trim portion 72 are spread apart and a mouth thereof is enlarged as compared with the final configuration in the attached state thereof (FIG. 3).

This weather strip 71A is attached to the flange 44 of the sun roof panel 41 by placing the trim portion 72 so as to surround the flange 44 and caulking the trim portion 72 with a caulking tool so as to narrow the mouth of the trim portion 72, whereby the gripping portions 73 are brought into pressurized contact with both surfaces of the flange 44. The gripping portions 73 elastically deform to conform to the side surfaces of the flange 44, and come into close contact with the entire surfaces of the flange 44 including the depressions 45.

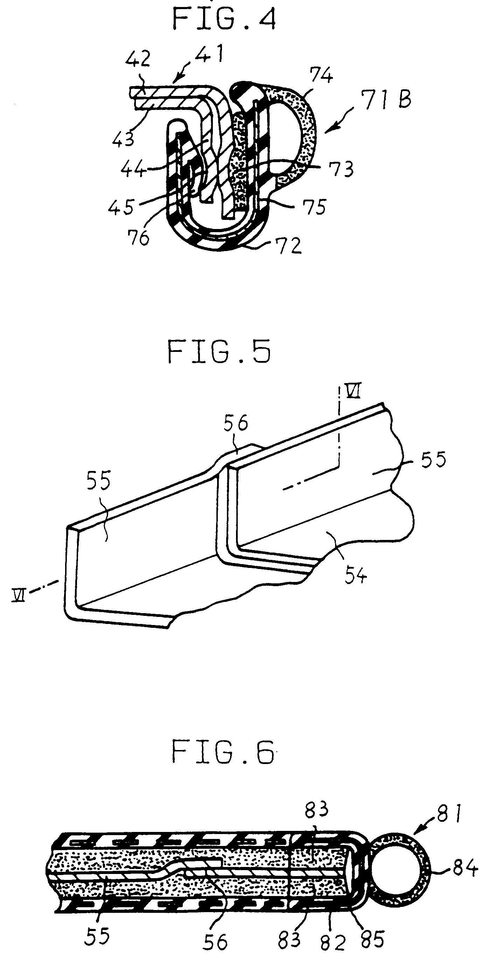

FIG. 4 illustrates a second embodiment of a weather strip for a sun roof. In a weather strip 71B, the flange gripping portion 73, composed of a sponge layer, is formed only on the side wall of the trim portion 72, which is located outside the flange 44. On the other side wall, a gripping lip 76 similar to the conventional example is formed. The remainder of the structure of the second embodiment is substantially identical to that of the first embodiment.

Rain water or the like normally intrudes through the gap between an outer surface of the flange 44 and the opposed trim portion 72. Therefore, the water can be prevented from intruding into the trim portion 72 by the sponge-layered gripping portion 73 located outside the flange 44.

FIGS. 5 and 6 illustrate a third embodiment wherein the present invention is applied to the weather strip for attachment to a flange 55 around an opening of a trunk 51 of a motor vehicle.

The flange 55 projects from a rear body panel 54 defining the trunk 51. This flange 55 is formed by continuously joining two or more panels to each other with an end edge of one panel overlapped with that of its adjacent panel, and accordingly has an overlapped joint 56.

A weather strip 81 (FIG. 6) for attachment to the flange 55 has a U-shaped trim portion 82 and a tubular sealing portion 84 formed on a top of the U-shaped trim portion 82. This sealing portion 84 is to be pressed by a peripheral edge of a trunk lid 53. Thick layer-like flange gripping portions 83 made of sponge material are formed on opposed inner surfaces of the trim portion 82. A metal core 85 is embedded within the trim portion 82.

This weather strip 81 is attached to the flange 55 by caulking, and the gripping portions 83 of sponge come into close contact with step-like surfaces around the overlapped joint 56 of the flange 55, as well as the remaining flat surface thereof, and accordingly exhibit good sealing properties.

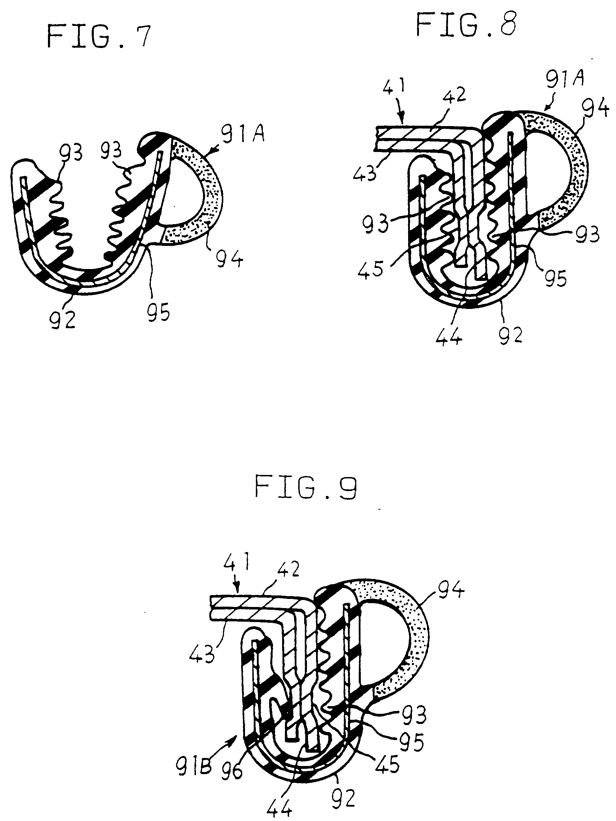

FIGS. 7 and 8 illustrate a fourth embodiment of the present invention.

In the outer periphery of the sun roof panel 41 of the motor vehicle (FIG. 1), flanges of the outer panel 42 and inner panel 43 are put together and spot-welded at predetermined intervals to provide a downwardly extending flange 44 (FIG. 8). At the spot-welded places of the flange 44, depressions 45 exist.

As shown in FIG. 7, a weather strip 91A for attachment to the flange 44 is provided with a trim portion 92 of a generally U-shaped cross-section and a tubular sealing portion 94 projecting outwardly from one of side walls of the trim portion 92. The trim portion 92 is made of solid rubber, and the sealing portion 94 is made of sponge rubber. A metal core 95 is embedded within the trim portion 92.

A plurality of rib-shaped projections 93 are formed substantially over the entire inner surfaces of the opposite side walls of the trim portion 92 so as to extend in a longitudinal direction of the trim portion 92 to compose saw-toothed flange gripping portions. Each projection 93 has a mountain-like cross-section and is close to its adjacent projection 93. Each projection 93 is of a generally equal height which ensures the projections 93 come into pressurized contact with the flat parts of the side surfaces of the flange 44.

As shown in FIG. 7, the weather strip 91A is formed integrally by extrusion into the configuration that the side walls of the trim portion 92 are spread apart and a mouth thereof is enlarged as compared with its final configuration in the attached state thereof (FIG. 8). This weather strip 91A is placed along the flange 44 so that the flange 44 is inserted into the trim portion 92, and then, the trim portion 92 is caulked with a caulking tool to narrow the mouth of the trim portion 92. As a result, the projections 93 are brought into pressurized contact with side surfaces of the flange 44, as shown in FIG. 8, whereby the weather strip 91A is securely attached to the flange 44.

In this state, the projections 93 are in close contact with flat parts of the flange 44 on the upper and lower sides of the depressions 45 of the flange 44 so that good sealing properties, enough for preventing intrusion of rain water or car washing water, can be obtained.

FIG. 9 illustrates a fifth embodiment of a weather strip for a sun roof. A weather strip 91B has a flange gripping portion composed of a plurality of projections 93 only on the inner surface of the trim portion 92, which faces the outer side surface of the flange 44. In the opposed inner surface of the trim portion 92, which faces the inner side surface of the flange 44, a conventional gripping lid 96 is formed. The remainder of the structure of the fifth embodiment is substantially identical to that of the fourth embodiment.

Rain water or the like normally intrudes into the trim portion 92 through the gap between the outer side surface of the flange 44 and the opposed inner surface of the trim portion 92. Accordingly, by improving the sealing properties of the weather strip 91B against the outer side surface of the flange 44, rain water or the like can be prevented from intruding into the trim portion 92.

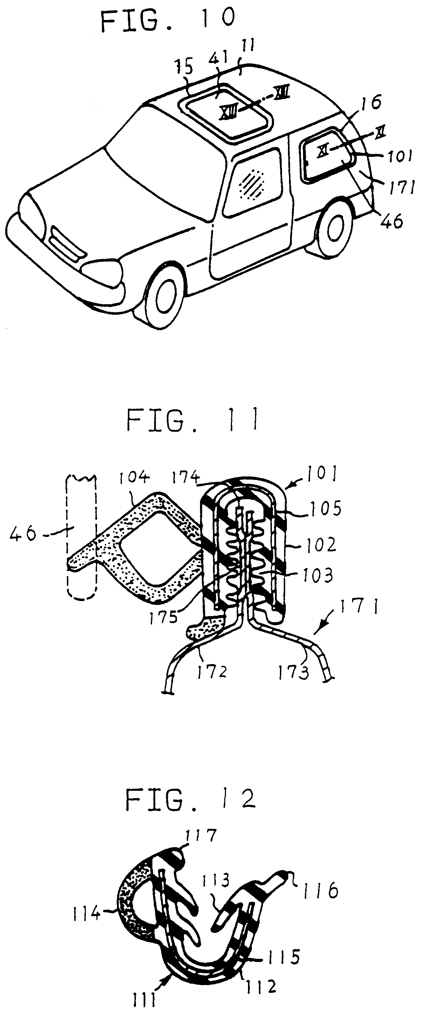

The present invention can be also applied to other weather strips. FIG. 11 illustrates a sixth embodiment wherein the present invention is applied to a weather strip 101 for attachment around an opening 16 of a quarter window of a motor vehicle, as shown in FIG. 10.

Along an end edge of a body panel 171 (a quarter pillar in FIG. 11), a flange 174 is formed by putting an outer panel 172 and an inner panel 173 together and joining them by spot-welding. At spot-welded places of the flange 174, depressions 175 exist. A metal core 105 is embedded within a U-shaped trim portion 102 of the weather strip 101. A plurality of projections 103 project from opposite inner surfaces of the trim portion 102 similar to the fourth embodiment. A tubular sealing portion 104 projects outwardly from one side wall of the trim portion 102 and abuts the outer periphery of the inner surface of a window pane 46. The weather strip 101 is formed integrally by extrusion into the configuration that the side walls of the trim portion 102 are spread apart and a mouth of the trim portion 102 is enlarged, and then the extruded weather strip 101 is attached to the flange 174 by caulking. This weather strip 101 exhibits operational advantages similar to those of the fourth embodiment.

FIGS. 12 and 13 illustrate a seventh embodiment wherein the present invention is applied to the weather strip for attachment to an end edge 15 of a roof panel 11 of the motor vehicle shown in FIG. 10. Along the end edge 15, a weather strip 111 is attached to seal between the end edge 15 and the sun roof panel 41. This weather strip 111 is attached to a flange 14 of the roof panel 11, which is formed along the end edge 15 by bending the roof panel 11 downwardly at generally right angles thereto.

The weather strip 111 has a U-shaped trim portion 112 made of solid rubber, within which a metal core 115 is embedded, and a tubular sealing portion 114 made of solid rubber, which projects outwardly from one of the side walls of the trim portion 112. Gripping lips 113 project from opposed inner surfaces of the trim portion 112 for gripping the flange 14. A rib 116 is further formed at an end of one side wall of the trim portion 112 on the opposite side of the sealing portion 114. The rib 116 projects obliquely outwardly from that side wall of the trim portion 112.

The weather strip 111 is formed by extrusion into the configuration that the side walls of the trim portion 112 are spread apart and a mouth thereof is enlarged, as shown in FIG. 12. Then, the flange 14 is inserted into the trim portion 12 and the trim portion 112 is pushed up until the rib 116 abuts the inner surface of the roof panel 11. Next, the side walls of the trim portion 112 are pressed with a caulking tool to narrow the mouth thereof, whereby the trim portion 112 is securely attached to the flange 14, as shown in FIG. 13.

In this step, the trim portion 112 is pressed while the rib 116 is in pressurized contact with the inner surface of the roof panel 11. Accordingly, if, due to caulking, a force is applied to the trim portion 112 counterclockwise (direction A in FIG. 15), the trim portion 112 is prevented from tilting in such a direction because the rib 116 is supported by the roof panel 11. Therefore, such a gap 66 (FIG. 15) is not generated between an end 117 of the trim portion 112 and the opposed flange 14. In the end portion of the side wall of the trim portion 112, from which the rib 116 projects, undulations are generated due to caulking. But, with the present embodiment, such undulations do not cause problems, because the end edge of the trim portion 112 is in close contact with the inner surface of the roof panel 11.

As described above, the weather strip in accordance with the present invention can be securely attached by caulking to a flange around an opening of a body panel or along a member which opens and closes the opening in close contact therewith and without tilting thereon.

While the invention has been described in connection with what is presently considered to be the most practical and preferred embodiments, it is to be understood that the invention is not limited to the disclosed embodiments, but, on the contrary, is intended to cover various modifications and equivalent arrangements included within the spirit and scope of the appended claims.

## Claims

1. A weather strip for attachment to a flange of a body panel of a motor vehicle, comprising:
a trim portion of generally U-shaped cross-section, in which a metal core is embedded, said trim portion having flange gripping portions which project from inner surfaces of opposed side walls thereof for gripping said flange on both sides thereof, and said trim portion being attached to said flange by caulking said side walls in opposite directions while inserting said flange into said trim portion; and
a sealing portion formed on an outer surface of said trim portion,
at least one of said flange gripping portions, which projects from an inner surface of at least one said opposed side walls, being composed of a sponge layer which covers said inner surface of said at least one of said opposed side walls and is constructed and arranged to come into pressurized contact with an opposed flange surface of said body panel.

2. The weather strip according to claim 1, wherein said flange gripping portion composed of a sponge layer is formed on an inner surface of said one side wall which is constructed and arranged to be located outside said flange in the attached state of said trim portion, and at least one lip-shaped flange gripping portion is formed on an inner surface of the other side wall so that an end thereof comes into pressurized contact with the opposed flange surface.

3. The weather strip according to claim 1, wherein said flange gripping portion composed of a sponge layer is respectively formed on inner surfaces of said opposed side walls of said trim portion.

4. A weather strip for attachment to a flange of a body panel of a motor vehicle, comprising:
a trim portion of generally U-shaped cross-section, in which a metal core is embedded, said trim portion having flange gripping portions which project from inner surfaces of opposed side walls thereof for gripping said flange on both sides thereof, and said trim portion being attached to said flange by caulking said side walls in opposite directions while inserting said flange into said trim portion; and
a sealing portion formed on an outer surface of said trim portion,
at least one of said flange gripping portions, which projects from an inner surface of at least one of said opposed side walls, being composed of a plurality of projections formed at predetermined intervals in the direction of height of said side wall so as to have a generally saw-toothed cross-section.

5. The weather strip according to claim 4, wherein said saw-toothed flange gripping portion is formed on an inner surface of said one side wall of said trim portion, which is to be located outside said flange, and at least one lip-shaped flange gripping portion is formed on an inner surface of the other side wall of said trim portion so that an end thereof comes into pressurized contact with an opposed flange surface of said body panel.

6. The weather strip according to claim 4, wherein said projections are respectively formed on inner surfaces of said opposed side walls of said trim portion.

7. A weather strip for attachment to a flange of a body panel of a motor vehicle, comprising:
a trim portion of generally U-shaped cross-section, in which a metal core is embedded, said trim portion having flange gripping portions which project from inner surfaces of opposed side walls thereof for gripping said flange on both sides thereof, and said trim portion being attached to said flange by caulking said side walls in opposite directions while inserting said flange into said trim portion; and
a sealing portion formed on an outer surface of said trim portion,
said trim portion further including a rib which projects obliquely outwardly from an end of one said side wall of said trim portion, which is to be located inside said flange in an attached state of said trim portion so that an end thereof abuts an inner surface of said body panel.
